# EUROPEAN PATENT SPECIFICATION

(11) **EP 1 180 476 B1**
(45) Date of publication and mention of the grant of the patent: **21.07.2004**
(21) Application number: 00830572.4
(22) Date of filing: 10.08.2000
(51) Int. Cl.: B62K 5/04, B62K 5/08

(54) **A laterally tilting three-wheeled vehicle**
Seitlich neigbares Dreiradfahrzeug
Véhicule à trois roues latéralement inclinables

(43) Date of publication of application: 20.02.2002
(73) Proprietor: Doveri, Marco, I-56025 Pontedera (Pisa) (IT)
(72) Inventor: Doveri, Marco, I-56025 Pontedera (Pisa) (IT)
(74) Representative: Mannucci, Gianfranco, Dott.-Ing.

(56) References cited:
- WO-A-97/21583
- DE-C- 19 838 328
- GB-A- 2 279 047

## Description

The present invention relates to a three-wheeled vehicle according to claim 1 and, more particularly, to a vehicle having two steering front wheels and a driving rear wheel.

WO-A-97 21583 describes a three-wheeled vehicle, comprising a driving rear wheel and two steering front wheels with respective steering axes, including a steering column fitted with a handlebar and a system, with elastic suspension, for connecting said wheels to the frame of the vehicle such that a lateral tilting of the frame is accompanied by an equal tilting of their steering axes, wherein said system connecting the two steering wheels to the frame includes an articulated parallelogram comprising an upper suspension arm and a lower suspension arm articulated on an upright by means of hinges, the upper and lower suspension arms being hinged on a support member, which is hinged on the frame, about respective pivot axes parallel to the median plane of the vehicle and orthogonal to the steering axes, and wherein a steering linkage is provided, equipped with a connecting rod rotatably connected to the steering column and to the wheels.

Certain types of tilting three-wheeled scooter are already known, such as the Stream® and Canopy® of Honda and the Ellisse® scooter of Protos which is described in WO-A-9843872.

The Honda models possess two rear wheels supported by a track hinged on the frame of the scooter about the longitudinal axis thereof. The axis of the rear wheels does not tilt in curves and remains parallel to the ground.

The scooter described in WO-A-9843872 likewise has two rear wheels, each of which is articulated on the frame by means of a longitudinal arm. The arms are in turn linked by means of an equalizer element hinged about an axis longitudinal to the vehicle on a pivoting bracket of an elastic suspension. Said vehicle possesses the advantage over said Honda models that, in curves, the rear wheels also tilt with the vehicle. This fact increases the directional control of the vehicle in that, in curves, wheels tilted in this way deviate less than those which do not tilt.

All the abovementioned models therefore refer to tilting vehicles fitted with two rear wheels. Said arrangement considerably complicates the mechanical transmission of the drive to the wheels, with the disadvantage of a high production cost. In particular, a differential system is made necessary for transmitting the power to the wheels.

Three-wheeled vehicles are also known having one driving rear wheel and two steering front wheels, but for these no elastic suspension is provided. An example of a scooter of this type is described in Italian Utility Model Application 15179B/80, applied for on April 30, 1980 in the name of Tartarini.

The object of the present invention is to provide a laterally tilting three-wheeled vehicle having two steering front wheels, which is of modest cost and is easy and safe to drive. More particularly, an object of the present invention is to produce a three-wheeled vehicle having better roadholding than the three-wheeled vehicles currently known.

These and other objects and advantages which will become apparent to those skilled in the art from reading the text which follows are substantially obtained with a three-wheeled vehicle comprising a driving rear wheel and two steering front wheels with respective steering axes, wherein a system, with viscoelastic suspension, is provided for connecting said wheels to the frame of the vehicle. The suspension system makes it possible to obtain tilting of the steering axes of the wheels when the frame tilts in curves. The deviation of the tires of the wheels during steering is thus minimized and roadholding in curves is improved.

According to a particularly advantageous embodiment of the vehicle according to the invention, provision is made for the system connecting the two steering wheels to the frame to possess, for each steering wheel, an articulated quadrilateral comprising an upper suspension arm, a lower suspension arm and an upright disposed between the two arms and articulated thereon by means of ball joints. The upper and lower suspension arms are hinged on the frame about respective pivot axes disposed parallel and symmetrically on opposite sides of the median plane of the vehicle.

In an arrangement of this type, provision may advantageously be made for the distance between the ball joint and the pivot axis of each upper suspension arm of each quadrilateral to be approximately equal to the distance between the ball joint and the pivot axis of each lower arm.

Preferably, the axis which passes through the ball joints of the upright of each steering wheel and which defines the steering axis of said wheel is contained within the median plane of the respective wheel. This prevents the irregularities of the road from transmitting bumps and vibrations to the driver via the steering control (in practice, the handlebar attached to the steering column), bumps and vibrations instead being absorbed by the frame of the vehicle. This makes driving particularly easy and pleasant.

In practice, the articulated quadrilateral formed by the upper and lower arms, the upright and the frame is preferably an articulated parallelogram, with the upper and lower arms remaining mutually parallel during the tilting of the wheels.

A steering linkage is associated with the suspension system. It may be adjacent to the lower pair of arms or alternatively to the upper pair of suspension arms. The choice of the position of the linkage depends on the specific configuration of the vehicle on which the suspension system is being produced, on the basis of component sizes and available space.

The linkage may possess, according to a practical embodiment, connecting rods having at their ends ball joints for connection to the steering and to the wheels, respectively. In this case, it is particularly advantageous if the centers of the ball joints of each connecting rod of said linkage possess, in projection onto a plane orthogonal to the axis of rotation of the suspension arms, a mutual separation substantially equal to the distance between the ball joint and the pivot axis of the suspension arms. In this way, the steering orientation of the wheels is preserved even during oscillations of the suspension, independently of the lateral tilting of the vehicle.

When the steering axis of each wheel is contained within the median plane of the respective wheel, then - according to a particularly advantageous embodiment of the invention - in order to achieve correction of the steering angle of the wheels so that the wheel on the outside of the curve steers less than the inside wheel, it is provided that the centers of the ball joints which connect each rod of said linkage to the steering are mutually spaced and disposed on opposite sides of the median plane of the vehicle.

The viscoelastic means of the suspension may be linked to two opposite suspension arms - in other words, for example, to the two upper suspension arms or to the two lower suspension arms. In this manner, a single suspension system, comprising for example a spring/shock absorber assembly, provides for the elastic suspension of both wheels.

The suspension arms with which the spring/shock absorber assembly is associated, for example the upper arms, are in this case articulated on the frame about a common axis of articulation or two slightly spaced axes of articulation, but in either case pivot independently of one another, opposed by the spring/shock absorber assembly.

However, the possibility is not ruled out that a pair of opposing arms may be solidly fixed to one another, forming a cross-piece articulated centrally on the frame of the vehicle. In this case, a respective spring/shock absorber assembly is provided for each wheel, fitting in the upright of the associated articulated quadrilateral.

Further advantageous embodiments of the vehicle according to the invention are described in the attached dependent claims.

The invention will be better understood with reference to the description and the attached drawing, which shows a non-limiting example of said invention. In the drawing:
Figs 1 and 2 show diagrammatic views, from the front and side respectively, of the front part of a scooter equipped with a pair of steering front wheels according to a first embodiment of the invention, the scooter in the lateral view being sectioned in a vertical plane marked II-II in Fig. 1;
Fig. 3 shows a view of the steering assembly, sectioned in a plane shown as III-III in Fig. 2, orthogonal to the steering axis of the wheels;
Figs 4 and 5 show partial frontal views, analogous to that in Fig. 1, in respective different attitudes of the elastic suspension;
Fig. 6 shows a view analogous to that in Fig. 1, but with the scooter tilted laterally;
Figs 7 and 8 show views analogous to those in Figs 1 and 2, respectively, for a second embodiment of the invention; and
Fig. 9 shows a diagrammatic perspective view of a vehicle according to the invention.

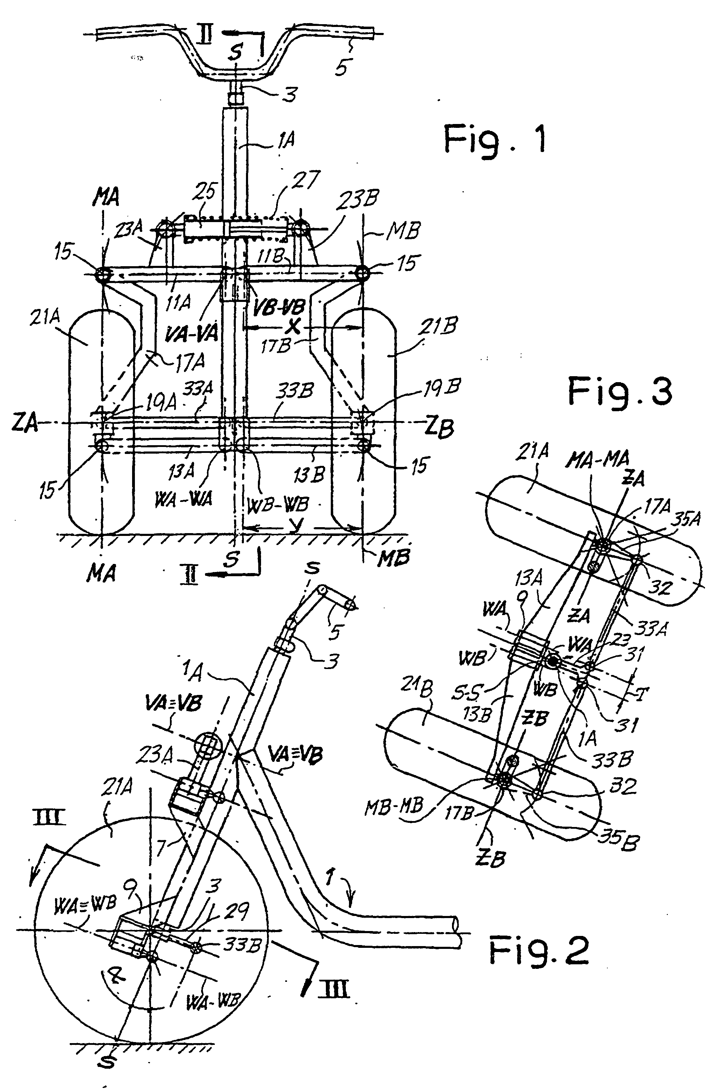

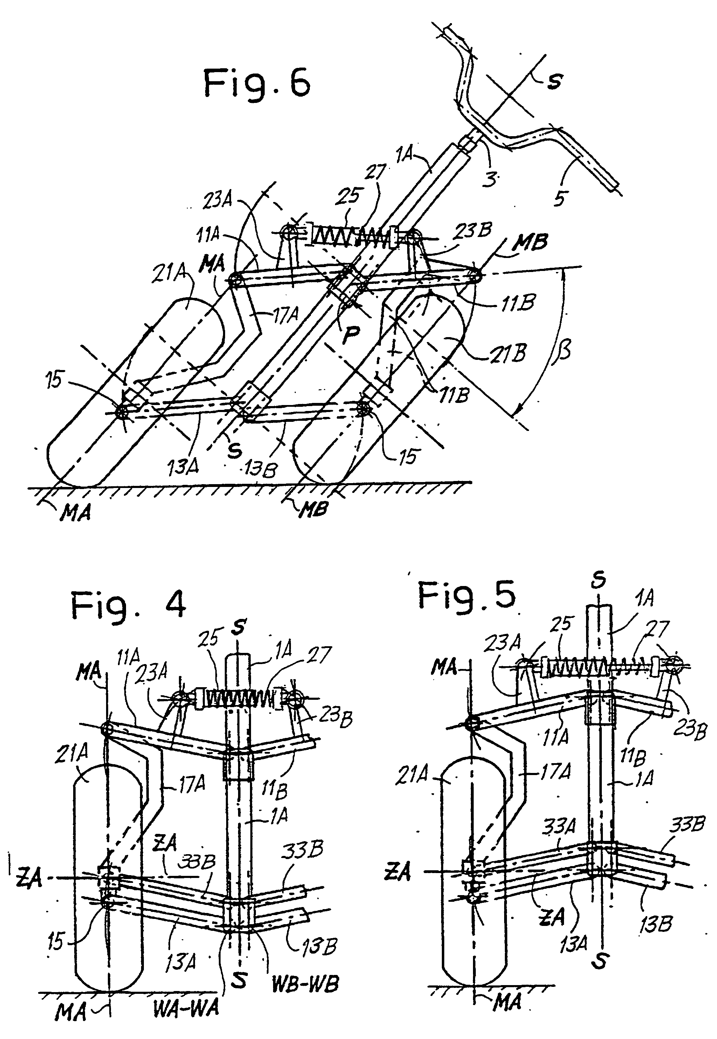

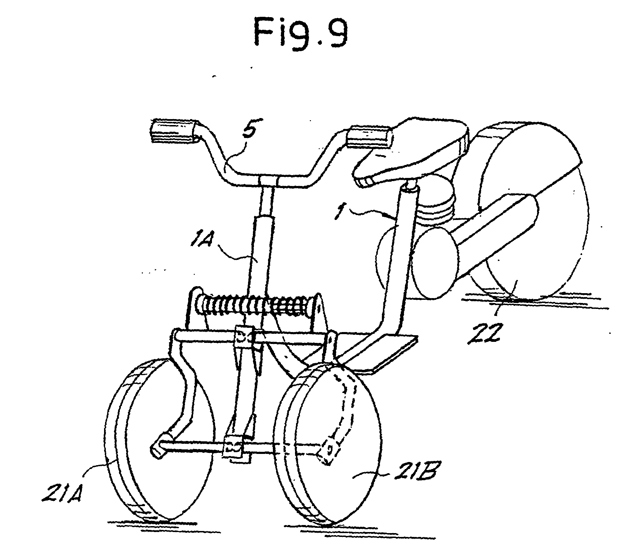

With reference to Figs 1 and 2, the scooter comprises a frame 1 which possesses at the front a tubular sleeve 1A into which is rotably inserted a steering column 3 fitted with a handlebar 5. The axis S-S of the sleeve lies in the median plane of the vehicle and is tilted relative to the vertical in the interests of greater practicality and as a function of the position of the handlebar. At the rear, a single driving wheel 22 is provided (Fig. 9).

Welded to the sleeve 1A are an upper bracket 7 and a lower bracket 9 forming hinges for respective pairs of upper suspension arms 11A, 11B and lower suspension arms 13A, 13B. The suspension arms 11A, 11B and 13A, 13B may also be hinged on the frame in another manner instead of by means of the brackets 7 and 9, depending on the design requirements.

The suspension arms of each of said pairs are disposed symmetrically on opposite sides relative to the median plane of the vehicle. The pivot axes VA, VB; WA, WB of the various arms lie in respective planes parallel to the median plane of the vehicle and perpendicular to the steering axis of the wheels. Each upper suspension arm 11A; 11B and lower suspension arm 13A; 13B is articulated in turn - at the opposite end from the pivot axis - by means of respective ball joints 15 on corresponding upper and lower ends of respective uprights 17A; 17B. In this manner, each pair of arms, upper and lower, forms, with the respective upright and the sleeve 1A, an articulated quadrilateral 11A, 17A, 13A and 11B, 17B, 13B.

The axes VA-VA, VB-VB and WA-WA, WB-WB are orthogonal to the axes MA-MA and MB-MB which join the upper and lower ball joints 15 of each upright 17A, 17B. The ball joint 15 of each upper arm 11A; 11B is set apart from the pivot axis VA-VA; VB-VB of said arm by a segment X (Fig. 1) equal and parallel to the analogous segment Y of the corresponding lower arm 13A; 13B. Pivoted on each upright, by means of a conventional bearing/axle assembly 19A; 19B, is a respective front wheel 21A; 21B to revolve about a respective horizontal axis ZA-ZA; ZB-ZB.

Furthermore, the axis MA-MA; MB-MB which passes through the two, upper and lower ball joints 15 of the upright 17A; 17B of each steering wheel 21A; 21B and defines the steering axis of said wheel is contained in the median plane of the wheel and, in the example shown, is parallel to the axis S-S of the steering column 3. The tilt α of the axes MA-MA and MB-MB is not necessarily equal to the tilt of the steering axis S-S and is determined on the basis of considerations known to the person skilled in the art in order to obtain an appropriate compromise between stability and maneuverability of the vehicle.

In the example shown, the upper suspension arms 11A; 11B possess respective transverse extensions 23A; 23B that are symmetrical relative to the median plane of the vehicle and turned upward. Articulated on the ends of said extensions are respective ends of a fluid shock absorber 25 and of a large spring 27 which tends to move them apart. The elastic suspension permits a vertical travel of the front part of the vehicle between two, lower and upper end positions, as shown in Figs 4 and 5.

Fixed to the lower end of the steering column 3 is a central link rod 29 oriented parallel to the median plane of the wheels 21A, 21B and linked by means of ball joints 31 and connecting rods 33A; 33B which are in turn connected via ball joints 32 to the ends of respective lateral link rods 35A; 35B. Each lateral link rod 35A; 35B is solidly fixed to the respective upright 17A; 17B of the suspension, and the center of the ball joint 32 of each lateral link rod lies in the median plane of the respective wheel 21A, 21B.

The joints 31 of the central link rod 29 are disposed symmetrically at the side of the axis of said link rod and their centers are set apart by a segment T so as to differentiate, in curves, the steering angle of the outer wheel from that of the inner wheel in order to obtain correct steering. This arrangement makes it possible to obtain correct steering while keeping the joints 32 on the center line of the wheel. The distance T is advantageously equal to the center distance between the axes VA-VA and VB-VB and the center distance between the axes WA-WA and WB-WB. In this manner, correct steering behavior in curves is obtained.

Each connecting rod 33A; 33B has a length such that its projection onto a plane orthogonal to the pivot axes of the suspension arms 11A, 11B; 13A, 13B has a length equal to the characteristic segment (X, Y) of the arms. In this manner, the joltings permitted by the suspension do not change the annular position of each wheel defined by the angular attitude of the handlebar 5, preventing disruption to the steering and minimizing tire wear.

As shown in Fig. 6, the system described permits lateral tilting of the vehicle, for example through an angle β, in particular to offset the centrifugal force when cornering. In the example shown, the pivot axes of the upper arms 11A; 11B are set apart from one another by a segment P, but it is not impossible for the two pivot axes to coincide, without preventing independent oscillation of the two suspension arms.

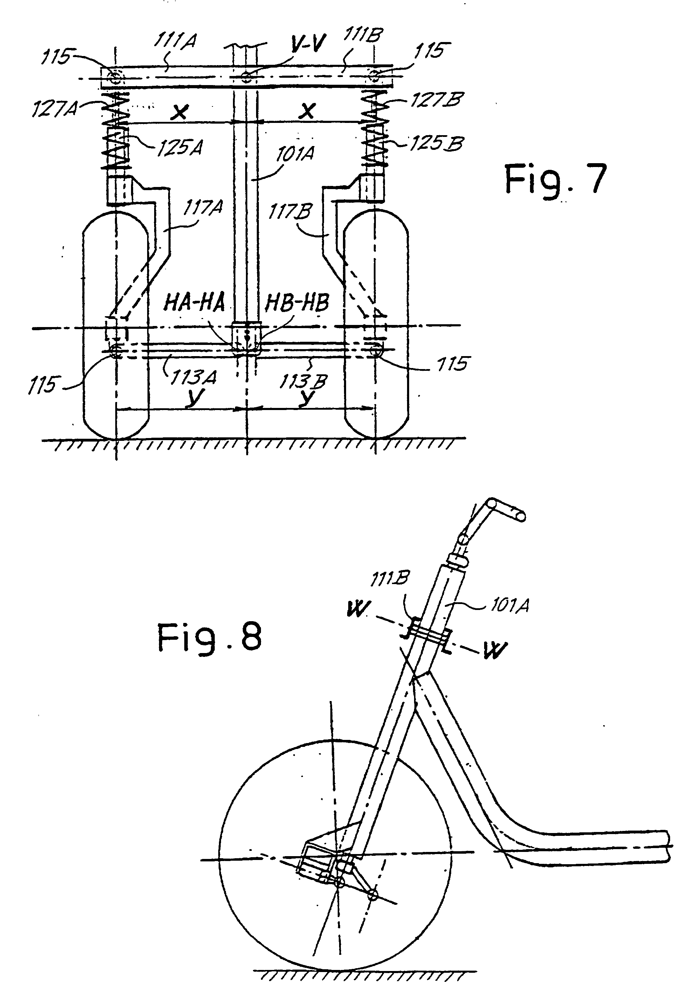

In a second embodiment of the invention (Figs 7 and 8), the system for connecting the steering front wheels to the frame comprises respective articulated suspension quadrilaterals 111A, 117A, 113A, 101A; 111B, 117B, 113B, 101A in which the upper arms 111 are rigidly connected to one another so as to form a cross-piece articulated in the central region about a pivot of axis V-V on the steering sleeve 101A.

Furthermore, between the upper part of the uprights 117A; 117B and the ball joints 115 of the upper arms 111A; 111B, respective fluid shock absorbers 125A; 125B are interposed, having respective compression springs 127A; 127B to form elastic suspensions of the MacPherson type. The steering linkage is analogous to that described in the previous case and is not shown in the drawing. In this case, the lengths X and Y of the upper and lower arms are not identical, as they were in the previous case.

It is understood that the drawing shows only an example, given solely by way of a practical demonstration of the invention, said invention being capable of variation in shape and disposition without thereby departing from the scope of the idea underlying said invention. The presence of any reference numbers in the appended claims is intended to facilitate reading of the claims with reference to the description and does not limit the scope of protection represented by the claims.

## Claims

1. A three-wheeled vehicle, comprising a driving rear wheel (22) and two steering front wheels (21A, 21B) with respective steering axes (MA-MA, MB-MB), including a steering column (3) fitted with a handlebar (5) and a system, with viscoelastic suspension, for connecting said wheels to the frame of the vehicle such that a lateral tilting of the frame is accompanied by an equal tilting of their steering axes (MA-MA, MB-MB), wherein:
• said system connecting the two steering wheels to the frame includes, for each steering wheel, an articulated parallelogram comprising an upper suspension arm (11A; 11B; 111A, 111B) and a lower suspension arm (13A, 13B; 113A, 113B) articulated on an upright (17A, 17B; 117A, 117B) by means of ball joints (15; 115), the upper and lower suspension arms being hinged on the frame (1; 101) about respective pivot axes (VA-VA, WA-WA, VB-VB, WB-WB; V-V) parallel to the median plane of the vehicle and orthogonal to the steering axes;
• a steering linkage is provided, equipped with connecting rods (33A; 33B) having at their ends ball joints (31, 32) for connection to the steering column (3) and to the wheels, respectively;
• the centers of the ball joints (31, 32) of each connecting rod of said linkage possess, in projection onto a plane orthogonal to the axis of rotation of the suspension arms (13A; 13B), a mutual separation substantially equal to the distance between the ball joint (15; 115) and the pivot axis (VA, VB, WA, WB; V; HA-HA, HB-HB) of said suspension arms (11A, 11B; 13A, 13B; 111A, 111B; 113A, 113B).

2. Vehicle according to claim 1, **characterized in that** the pivot axes of two opposite suspension arms are disposed symmetrically on opposite sides of the median plane of the vehicle.

3. Vehicle according to claim 1 or 2, **characterized in that** the distance (X) between the ball joint (15; 115) and the pivot axis (VA-VA, VB-VB; V-V) of each upper suspension arm (11A, 11B; 111A, 111B) is approximately equal to the distance (Y) between the ball joint (15; 115) and the pivot axis (WA-WA, WB-WB; HA-HA, HB-HB) of each lower arm (13A, 13B; 113A, 113B).

4. Vehicle according to claim 1, 2 or 3, **characterized in that** the axis (MA-MA; MB-MB) which passes through said ball joints of the upright of each steering wheel (21A; 21B) and which defines the steering axis of said wheel is contained within the median plane of the respective wheel.

5. Vehicle according to one or more of the preceding claims, **characterized in that** the centers of the ball joints (31) which connect each rod of said linkage to the steering are mutually spaced (T) and disposed on opposite sides of the median plane of the vehicle in order to achieve correction of the steering angle of the wheels (21A, 21B).

6. Vehicle according to any one of claims 1 to 5, **characterized in that** said viscoelastic means are interposed between the upper suspension arms (11A, 11B) or between the lower suspension arms (13A, 13B), the arms between which said viscoelastic means are interposed being articulated independently of one another on the frame.

7. Vehicle according to claim 6, **characterized in that** said viscoelastic means comprise a spring (27) and a shock absorber (25) operating jointly between transverse extensions (23A; 23B) solidly fixed to two corresponding suspension arms (11A; 11B).

8. Vehicle according to one or more of claims 1 to 7, **characterized in that** the axes of articulation (VA-VA, VB-VB; WA-WA, WB-WB) on the frame (1) of said upper suspension arms (11A; 11B) and of said lower suspension arms (13A, 13B) are mutually spaced.

9. Vehicle as claimed in one or more of the preceding claims, **characterized in that** the upper suspension arm (111A) of one wheel is solidly fixed to the upper suspension arm (111B) of the other wheel, forming a cross-piece hinged in the median part on the frame (101A) of the vehicle, the upright (117A; 117B) of each wheel comprising a shock absorber (125; 125B) and a spring (127A; 127B) operating jointly and interposed between the upright (117A; 117B) and one of the ball joints (115) connecting the upright to the suspension arms.

## Patentansprüche

1. Dreirädriges Fahrzeug mit einem angetriebenen Hinterrad (22) und zwei lenkbaren Vorderrädern (21A, 21B) mit jeweiligen Lenkachsen (MA-MA, MB-MB), umfassend eine Lenksäule (3), die mit einer Lenkstange (5) versehen ist, und ein System mit viskoelastischer Aufhängung zum Verbinden der Räder mit dem Rahmen des Fahrzeugs derart, dass eine seitliche Kippung des Rahmens mit einer gleich großen Kippung ihrer Lenkachsen (MA-MA. MB-MB) einhergeht, wobei:
- das die beiden lenkbaren Räder mit dem Rahmen verbindende System für jedes lenkbare Rad ein Gelenkparallelogramm aufweist mit einem oberen Aufhängungsarm (11A; 11B; 111A, 111B) und einem unteren Aufhängungsarm (13A, 13B; 113A, 113B), die mittels Kugelgelenken (15; 115) an einem aufrechten Koppelglied (17A, 17B; 117A, 117B) angelenkt sind, wobei der obere und untere Aufhängungsarm an dem Rahmen (1: 101) um jeweilige Schwenkachsen (VA-VA, WA-WA, VB-VB, WB-WB; V-V), die parallel zur Mittelebene des Fahrzeugs und senkrecht zu den Lenkachsen sind, schwenkbar gelagert sind;
- ein Lenkgestänge vorgesehen ist, das mit Verbindungsstäben (33A; 33B) versehen ist, die an ihren Enden Kugelgelenke (31, 32) für die Verbindung mit der Lenksäule (3) bzw, mit den Rädern aufweisen;
- die Mittelpunkte der Kugelgelenke (31, 32) jedes Verbindungsstabes des Gestänges, in der Projektion auf eine zur Drehachse der Aufhängungsarme (13A; 13B) senkrechte Ebene, eine gegenseitige Entfernung haben, die im wesentlichen gleich ist im Abstand zwischen dem Kugelgelenk (15; 115) und der Schwenkachse (VA, VB, WA, WB; V; HA-HA, HB-HB) der Aufhängungsarme (11A, 11B; 13A. 13b; 111A, 111B; 113S, 113B).

2. Fahrzeug nach Anspruch 1, **dadurch gekennzeichnet, dass** die Schwenkachsen zweier gegenüberliegender Aufhängungsarme symmetrisch auf entgegengesetzten Seiten der Mittelebene des Fahrzeugs angeordnet sind.

3. Fahrzeug nach Anspruch 1 oder 2, **dadurch gekennzeichnet, dass** der Abstand (X) zwischen dem Kugelgelenk (15; 115) und der Schwenkachse (VA-VA, VB-VB; V-V) jedes oberen Aufhängungserms (11A, 11B; 111A, 111B) annähernd gleich ist dem Abstand (Y) zwischen dem Kugelgelenk (15; 115) und der Schwenkachse (WA-WA, WB-WB; HA-HA, HB-HB) jedes unteren Arms (13A, 13B; 113A, 113B).

4. Fahrzeug nach Anspruch 1, 2 oder 3, **dadurch gekennzeichnet, dass** die Achse (MA-MA; MB-MB), die durch die Kugelgelenke des lotrechten Kopplungsgliedes jedes lenkbaren Rades (21A, 21B) verläuft und die Lenkachse des Rades definiert, in der Mittelebene des jeweiligen Rades enthalten ist.

5. Fahrzeug nach einem oder mehreren der vorangehenden Ansprüche, **dadurch gekennzeichnet, dass** die Mittelpunkte der Kugelgelenke (31), die jeden Stab des Gestänges mit der Lenkung verbinden, im Abstand (T) voneinander und auf gegenüberliegenden Seiten von der Mittelebene des Fahrzeugs angeordnet sind, um eine Korrektur des Lenkwinkels der Räder (21A, 21B) zu erzielen.

6. Fahrzeug nach einem der Ansprüche 1 bis 5, **dadurch gekennzeichnet, dass** viskoelastische Mittel zwischen den oberen Aufhängungsarmen (11A, 11B) oder zwischen den unteren Aufhängungsarmen (13A, 13B) eingefügt sind, wobei die Arme, zwischen denen die viskoelastischen Mittel eingefügt sind, unabhängig voneinander an dem Rahmen angelenkt sind.

7. Fahrzeug nach Anspruch 6, **dadurch gekennzeichnet, dass** die viskoelastischen Mittel eine Feder (27) und einen Stoßdämpfer (25) umfassen, die gemeinsam zwischen Querfortsätzen (23A; 23B) arbeiten, die an zwei entsprechenden Aufhängungsarmen (11A; 11B) starr befestigt sind.

8. Fahrzeug nach einem oder mehreren der Ansprüche 1 bis 7, **dadurch gekennzeichnet, dass** die Gelenkachsen (VA-VA, VB-VB; WA-WA, WB-WB) der oberen Aufhängungsarme (11A; 11B) und der unteren Aufhängungsarme (13A, 13B) an dem Rahmen im Abstand voneinander angeordnet sind.

9. Fahrzeug nach einem oder mehreren der vorangehenden Ansprüche, **dadurch gekennzeichnet, dass** der obere Aufhängungsarm (111A) eines Rades an dem oberen Aufhängungsarm (111B) des anderen Rades starr befestigt ist, so dass ein Querträger im mittleren Bereich an dem Rahmen (101A) des Fahrzeugs angelenkt ist, wobei das senkrechte Kopplungsglied (117A; 117B) jedes Rades einen Stoßdämpfer (125; 125B) und eine Feder (127A; 127B) aufweist, die gemeinsam arbeiten und zwischen dem senkrechten Kopplungsglied (117A; 117B) und einem der das senkrechte Kopplungsglied mit den Aufhängungsarmen verbindenden Kugelgelenke (115) angeordnet ist.

## Revendications

1. Véhicule à trois roues comprenant une roue d'entraînement arrière (22) et deux roues de direction avant (21A, 21B) avec des axes de direction respectifs (MA-MA, MB-MB), comprenant une colonne de direction (3) ajustée avec un guidon (5) et un système, avec une suspension viscoélastique, pour connecter lesdites roues au châssis du véhicule de sorte qu'une inclinaison latérale du châssis soit accompagnée par une inclinaison égale de leurs axes de direction (MA-MA, MB-MB), dans lequel :
- ledit système connectant les deux roues de direction au châssis comprend, pour chaque roue de direction, un parallélogramme articulé comprenant un bras de suspension supérieur (11A; 11B; 111A; 111B) et un bras de suspension inférieur (13A; 13B; 113A; 113B) articulé sur un montant (17A ; 17B ; 117A ; 117B) au moyen de joints à rotule (15; 115), les bras de suspension supérieur et inférieur étant articulés sur le châssis (1 ; 101) autour des axes de pivot respectifs (VA-VA, WA-WA, VB-VB, WB-WB; V-V) parallèles au plan médian du véhicule et perpendiculaires aux axes de direction ;
- une timonerie de direction est pourvue de tiges de connexion (33A ; 33B) ayant au niveau de leurs extrémités des joints à rotule (31 ; 32) pour une connexion, respectivement, à la colonne de direction (3) et aux roues;
- les centres des joints à rotule (31 ; 32) de chaque tige de connexion de ladite timonerie possèdent, en projection sur un plan orthogonal à l'axe de rotation des bras de suspension (13A ; 13B), une séparation mutuelle sensiblement égale à la distance entre le joint à rotule (15 ; 115) et l'axe de pivot (VA, VB, WA, WB ; V ; HA-HA, HB-HB) desdits bras de suspension (11A, 11B, 13A, 13B; 111A, 111B; 113A, 113B).

2. Véhicule selon la revendication 1, **caractérisé en ce que** les axes de pivot de deux bras de suspension opposés sont agencés de manière symétrique sur des côtés opposés du plan médian du véhicule.

3. Véhicule selon la revendication 1 ou 2, **caractérisé en ce que** la distance (X) entre le joint à rotule (15 ; 115) et l'axe de pivot (VA-VA, VB-VB ; V-V) de chaque bras de suspension supérieur (11A, 11B; 111A, 111B) est approximativement égale à la distance (Y) entre le joint à rotule (15 ; 115) et l'axe de pivot (WA-WA, WB-WB ; HA-HA, HB-HB) de chaque bras inférieur (13A, 13B ; 113A, 113B).

4. Véhicule selon l'une quelconque des revendications 1, 2 ou 3, **caractérisé en ce que** l'axe (MA-MA ; MB-MB) qui traverse lesdits joints à rotule du montant de chaque roue de direction (21A ; 21B) et qui définit l'axe de direction de ladite roue est compris sur le plan médian de la roue respective.

5. Véhicule selon l'une quelconque ou plusieurs des revendications précédentes, **caractérisé en ce que** les centres des joints à rotule (31) qui relient chaque tige de ladite timonerie à la direction sont mutuellement espacés (T) et agencés sur des côtés opposés du plan médian du véhicule afin d'effectuer une correction de l'angle de direction des roues (21A ; 21B).

6. Véhicule selon l'une quelconque des revendications 1 à 5, **caractérisé en ce que** lesdits moyens viscoélastiques sont interposés entre les bras de suspension supérieurs (11A, 11B) ou entre les bras de suspension inférieurs (13A, 13B), les bras entre lesquels sont interposés les moyens viscoélastiques étant articulés de manière indépendante les uns par rapport aux autres sur le châssis.

7. Véhicule selon la revendication 6, **caractérisé en ce que** lesdits moyens viscoélastiques comprennent un ressort (27) et un amortisseur (25) fonctionnant conjointement entre des extensions transversales (23A ; 23B) fixées solidement sur deux bras de suspension correspondants (11A; 11B).

8. Véhicule selon l'une quelconque ou plusieurs des revendications 1 à 7, **caractérisé en ce que** les axes d'articulation (VA-VA, VB-VB ; WA-WA, WB-WB) sur le châssis (1) desdits bras de suspension supérieurs (11A; 11B) et desdits bras de suspension inférieurs (13A, 13B) sont mutuellement espacés.

9. Véhicule selon l'une quelconque ou plusieurs des revendications précédentes, **caractérisé en ce que** le bras de suspension supérieur (111A) d'une roue est solidement fixé au bras de suspension supérieur (111B) de l'autre roue, formant une entretoise articulée dans la partie médiane sur le châssis (101A) du véhicule, le montant (117A ; 117B) de chaque roue comprenant un amortisseur (125 ; 125B) et un ressort (127A ; 127B) fonctionnant conjointement et interposés entre le montant (117A ; 117B) et un des joints à rotule (115) reliant le montant aux bras de suspension.
